# EUROPEAN PATENT APPLICATION

(11) **EP 1 394 699 A2**
(43) Date of publication of application: **03.03.2004**
(21) Application number: 03102646.1
(22) Date of filing: 25.08.2003
(51) Int. Cl.: G06F 17/30

(54) **Profiling document files**

(30) Priority: 26.08.2002 US 227389
(71) Applicant: Cricket Technologies, LLC, Reston, VA 20191 (US)
(72) Inventor: MARTIN, John, VA 22066, GREAT FALLS (US); BERTRAND, John, CA 94102, SAN FRANCISCO (US)
(74) Representative: Poulin, Gérard

(57) **Abstract**

An electronic document legal discovery apparatus, system, method, and computer program product enables electronic document access, searching, filtering, virus checking, de-duplication, de-encoding/decrypting, page estimation, and time stamping. A processor is used to perform these various steps so as to provide an estimate of page count that would be produced from a printer if the data, after de-duplication, etc. is performed.

## Description

### BACKGROUND OF THE INVENTION

### FIELD OF THE INVENTION

This invention relates to systems, apparatuses, methods, and computer program products relating to electronically stored document data profiling. More particularly, the invention relates to data that may need to be processed by a party during a discovery phase of litigation.

### DISCUSSION OF THE BACKGROUND

Computer-based discovery in legal proceedings is becoming more and more widespread as tools providing cost effective and legally sound data discovery of electronic information are being developed. An overview of computer-based discovery in federal civil litigation is provided in a Federal Courts Law Review article by Kenneth J. Withers, entitled Computer-Based Discovery in Civil Litigation and dated October 2000, the entire contents of which are incorporated herein by reference. This article notes how discovery is changing in response to the pervasive use of computers and how more and more cases involve e-mail, word processed documents and spreadsheets, and records of Internet activity. This article discusses some of the potential for computer-based discovery to reduce overall discovery costs and improve the administration of justice. The article also explores the unique problems of computer-based discovery. The appendix provides a checklist of computer based discovery considerations for Rules 16(c) pretrial conferences.

In conducting computer-based discovery, problems arise with respect to the vast quantities of electronic documents that must be reviewed, whether for a party's document production in a litigation against another party, for conducting an internal investigation, or for satisfying government reporting requirements. A party's ability to manage each matter that can be mission critical depends on how fast it can capture, identify, review, assess, and produce relevant documents. The volume of electronic documents today far exceeds paper documents.

According to a University of California study (Lyan, P. and Vatian, H., "How Much Information"), the entire contents of which are hereby incorporated by reference, over 90% of corporate documents are created electronically and an estimated 70% of those are never printed to paper. Additionally, e-mail communication among employees is approaching 3 billion a day. This has dramatically increased the volume, complexity, and cost of electronic document discovery. Moreover, emailing-employees (custodians) often have multiple data sets contained in multiple messaging systems. Electronic documents, whether e-mail stored on hard drives, backup tapes, etc. come in numerous file types (e.g., MICROSOFT WORD, NOVEL WORD PERFECT, MICROSOFT EXCEL, LOTUS 123, MICROSOFT OUTLOOK, SYMANTEC ACT, AND MICROSOFT OUTLOOK) as well as numerous versions. These documents are often times encoded as well as may be virus infected. Often a party is required to produce these vast amounts of electronic documents in paper form, a process that can be unjustifiably expensive without telescoping the retrieval of documents based on relevant issues.

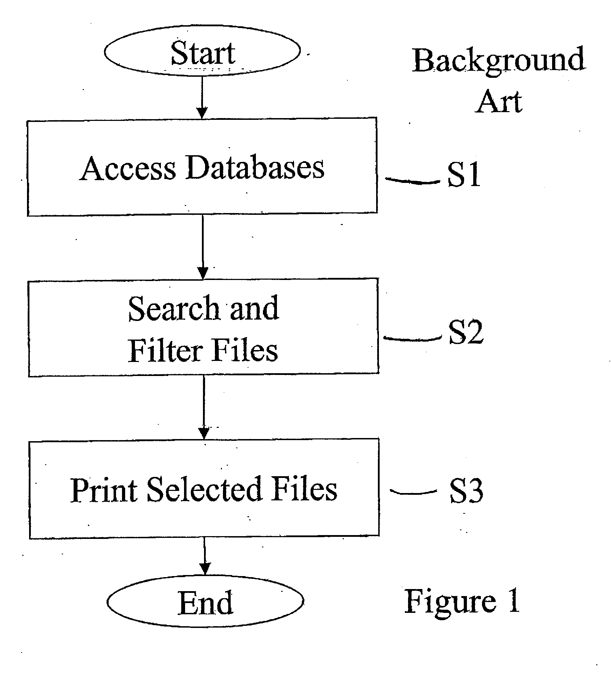

Figure 1 is a flow chart that illustrates the electronic document legal discovery process common today. Today's process begins in step S1 with accessing one or more data archives, followed by searching and filtering these archives in step S2 in order to identify documents that may be of interest, and printing these select files in step S3. Typically, this searching and filtering is restricted to parameters such as file-owner, date, destination, or other high-level file meta-data. These files are typically not searched or filtered by size, content for duplication, versions, encryption/encoding, or virus. Typically files printed via this process are manually reviewed (at great expense) for relevancy, redundancy, and readability.

As noted previously, many of the printed documents are eventually found to be redundant, encoded, or somehow corrupted and thus illegible. Furthermore, many search and filtering processes of the current art are rudimentary and result in documents being printed that are not of interest to the legal discovery process. The costs of printing can be exorbitant and costs are greatly increased when review time of legal staff at high hourly rates is added. What is desired, as recognized by the present inventors, is a way to quickly search and retrieve documents that are relevant to the legal discovery process while not incurring the large expense of having to print largely useless and/or redundant materials that have to be reviewed manually and thereby incurring another expense.

### SUMMARY OF THE INVENTION

The present invention addresses and resolves the above identified as well as other limitations with conventional electronic file review and legal discovery systems and methods. The present invention provides a low cost, easy-to-implement infrastructure and technology for electronic document discovery. The present invention includes a software based data profiler tool that enables users to cost-effectively deal with voluminous and complex electronic document discovery.

In the present invention, the software based data profiler tool accesses data stored in a computer readable medium and then:
(1) identifies the file types within an electronic archive that can be properly converted for downstream searching;
(2) quantifies the documents that can be printed so that cost estimates of print production can be communicated to decision makers;
(3) identifies duplicate documents that can be eliminated from the estimated quantity;
(4) identifies, cleans, and/or deletes virus infected files;
(5) identifies, decodes/decrypts, and/or deletes encoded files; and
(6) time-stamps and digitally authenticates files to protect against future document manipulation or destruction.

### BRIEF DESCRIPTION OF THE DRAWINGS

A more complete appreciation of the present invention and many of the attendant advantages thereof will be readily obtained as the same becomes better understood by reference to the following detailed descriptions and accompanying drawings:
Figure 1 is a flow diagram of a conventional method of selecting files to print as part of a litigation discovery process;
Figure 2 is a high-level flow diagram of a method of electronic document data profiling of the present invention;
Figure 3 is a detailed flow diagram of a method of electronic document data profiling of the present invention;
Figure 4 is a block diagram of the present invention; and
Figure 5 is a block diagram of a computer used with the present invention.

### DETAILED DESCRIPTION OF THE PREFERRED EMBODIMENTS

The following comments relate to the drawings, wherein like reference numerals designate identical or corresponding parts throughout the several views.

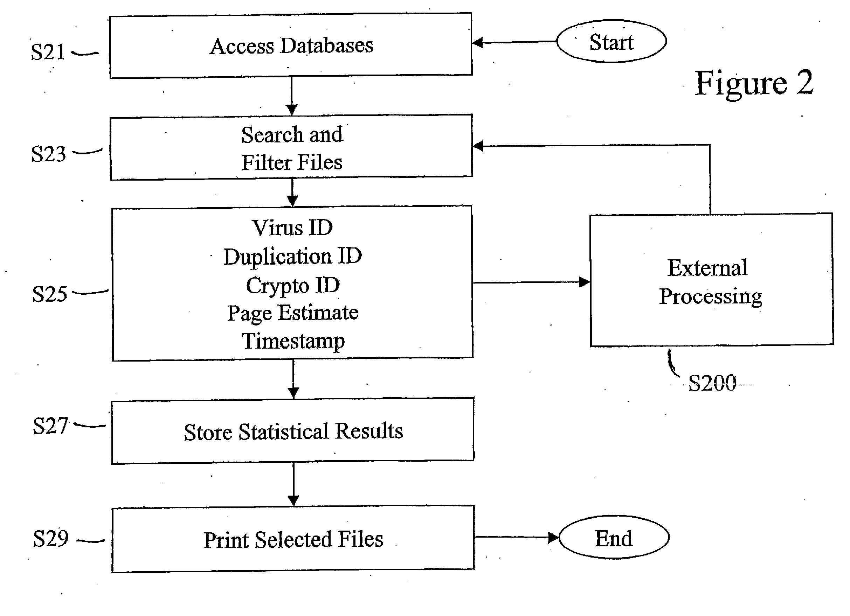

Figure 2 illustrates an overview of a method employed by the present invention. One or more databases are accessed in step S21, the contents of which are searched and filtered against stored predetermined search and filtering criteria (or criteria selected by a user) in step S23. Data that successfully passes the search and filter stage in step S23 is then checked for viruses, duplications, encoding and encryption, page estimation and time stamping via a data discovery process in step S25. The results of the data discovery process in step S25 are stored via a statistical result storage process in step S27. These results are printed (optionally) in step S29. Files that require special processing and/or conversion may be sent for special processing in step S200.

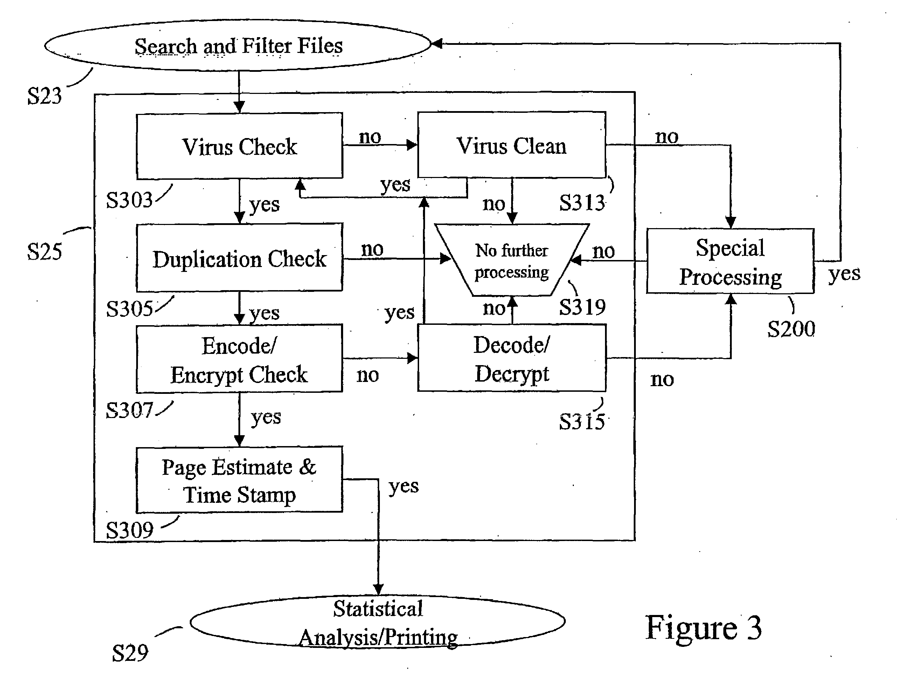

Figure 3 illustrates details about the legal discovery process of step S25. Filtered and/or selected files from step S23 are subjected to a virus checking process in step S303. In one embodiment, virus checking is performed with a Perl File Scan Module, which is currently supported by Amavis and Mimedefang. Files that have no viruses are then sent to a duplication identification process in step S305. In one embodiment, file duplication is determined by the MD5 hash algorithm developed by Professor Ronald L. Rivest of MIT. Files that are not duplicates may be sent to an encoding and encryption identification process in step S307. Optionally, the file encryption detection step may be skipped. Files that are not duplicates (and optionally, are not encoded or encrypted) are then sent to a time stamping and a page estimation process in step S309. In one embodiment, page estimation is determined by a bytes-to-pages ratio which varies per file type. In another embodiment actual pages are read for file headers. At any time during this process, summary statistics can be stored, visualized, and printed via step S29.

A file that is determined to have a virus by the virus checking process in step S303 may be sent to a virus cleaning process in step S313 or may be marked for exclusion in step S319. Files with viruses that can be cleaned can then be sent to the duplication checking process in step S305. However files that cannot be cleaned by the virus cleaning process in step S313 may be exported for special processing in step S200 or may be marked for exclusion in step S319. Files that are determined to be duplicates at the duplication checking process in step S305 are marked for exclusion in step S319 and are not forwarded for further processing. Files that are determined to be either encoded and/or encrypted by the encoding and encryption identification process in step S307 may be sent to a decoding and/or decrypting process in step S315 or may be marked for exclusion in step S319. Files that are successfully decoded and/or decrypted may then be sent back to the virus ID module. Files that cannot be decoded or decrypted in step S307 may be sent for special processing in step S200 or may be marked for exclusion in step S319.

A sample set of results from the process of Figures 2 and 3 is found in Tables 1 and 2 below. The "extension types" is an example of one of the predetermined search and filter criteria discussed above.

**Table 1**

| Sample Detail Report | | | | |
|---|---|---|---|---|
| Extension Types | Viruses | Duplicates | Total Files | Estimated Pages |
| | | | | |
| BAK | 0 | 0 | 1 | 0 |
| bmp | 0 | 0 | 1 | 1 |
| com | 0 | 0 | 1 | 0 |
| com-access_log | 0 | 0 | 1 | 0 |
| com-error_log | 0 | 0 | 1 | 0 |
| doc | 0 | 0 | 3 | 3 |
| eps | 0 | 0 | 1 | 0 |
| gif | 0 | 1 | 22 | 300 |
| html | 0 | 0 | 19 | 19 |
| jbf | 0 | 0 | 2 | 0 |
| jpg | 0 | 4 | 46 | 46 |
| ori | 0 | 0 | 1 | 0 |
| pl | 0 | 0 | 1 | 0 |
| png | 0 | 1 | 41 | 0 |
| psd | 0 | 2 | 15 | 0 |
| psp | 0 | 0 | 17 | 0 |
| TIF | 0 | 4 | 9 | 0 |
| tmp | 0 | 0 | 1 | 0 |
| txt | 0 | 0 | 3 | 3 |
| unknown | 0 | 33 | 2 | 0 |
| wmv | 0 | 0 | 3 | 0 |

**Table 2**

| Sample Summary Report | |
|---|---|
| Total Viruses: | 0 |
| Total Duplicates: | 45 |
| Total Files: | 191 |
| Total Estimated Pages: | 372 |

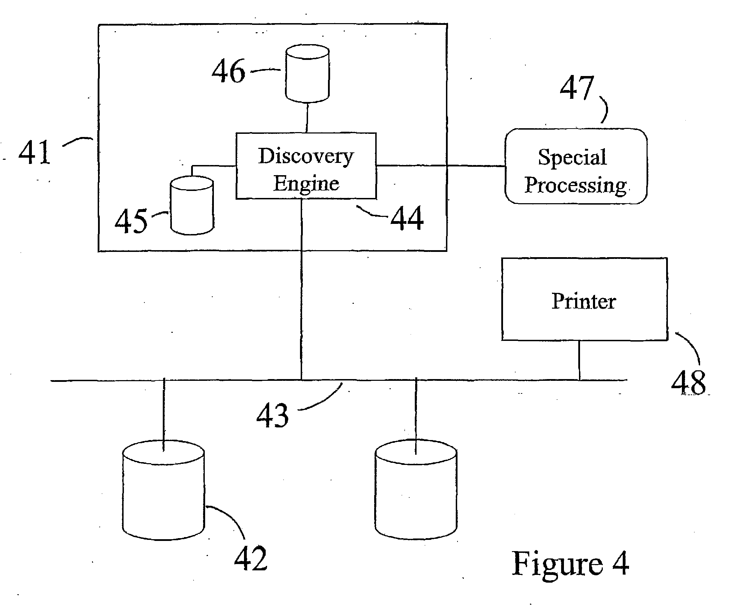

Figure 4 illustrates the overarching system architecture of the present invention. The legal discovery tool 41 accesses one or more databases 42 via an interconnection media 43. The interconnection media 43 is preferably a local area network but may also be via wireless or direct storage media access. The databases 42 may be of any commercial or proprietary structure (e.g., SQL, HTML, flat files, object-oriented) and content (e.g., documents, email, annotated images, annotated audio/video, etc.). The legal discovery engine 44 performs a filtering and selection operation with pre-stored and/or operator entered criteria 45. These criteria may include author name, file creation date, title, keyword, or other readily available meta-data. The results of the legal discovery process are stored in a separate repository 46. Files that require special processing may be exported via multiple methods to a special processing infrastructure 47. At any time, files or statistical results of the legal discovery process may be sent to a printer 48 for printing via the interconnection media 43.

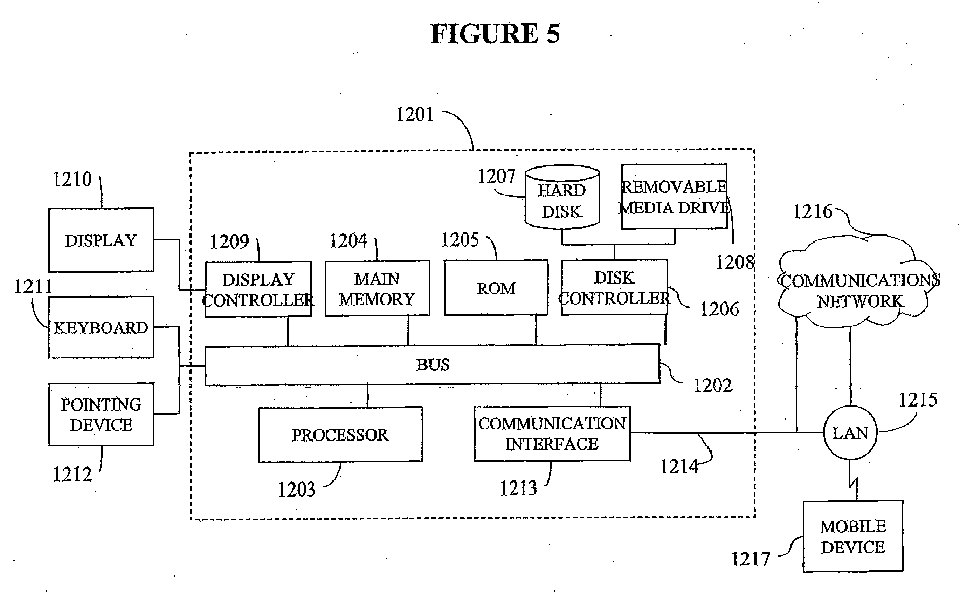

Figure 5 illustrates an example basic computer block diagram used in association with this invention. Figure 5 illustrates a computer system 1201 upon which an embodiment of the present invention may be implemented. The computer system 1201 includes a bus 1202 or other communication mechanism for communicating information, and a processor 1203 coupled with the bus 1202 for processing the information. The computer system 1201 also includes a main memory 1204, such as a random access memory (RAM) or other dynamic storage device (e.g., dynamic RAM (DRAM), static RAM (SRAM), and synchronous DRAM (SDRAM)), coupled to the bus 1202 for storing information and instructions to be executed by processor 1203. In addition, the main memory 1204 may be used for storing temporary variables or other intermediate information during the execution of instructions by the processor 1203. The computer system 1201 further includes a read only memory (ROM) 1205 or other static storage device (e.g., programmable ROM (PROM), erasable PROM (EPROM), and electrically erasable PROM (EEPROM)) coupled to the bus 1202 for storing static information and instructions for the processor 1203.

The computer system 1201 also includes a disk controller 1206 coupled to the bus 1202 to control one or more storage devices for storing information and instructions, such as a magnetic hard disk 1207, and a removable media drive 1208 (e.g., floppy disk drive, read-only compact disc drive, read/write compact disc drive, compact disc jukebox, tape drive, and removable magneto-optical drive). The storage devices may be added to the computer system 1201 using an appropriate device interface (e.g., small computer system interface (SCSI), integrated device electronics (IDE), enhanced-IDE (E-IDB), direct memory access (DMA), or ultra-DMA).

The computer system 1201 may also include special purpose logic devices (e.g., application specific integrated circuits (ASICs)) or configurable logic devices (e.g., simple programmable logic devices (SPLDs), complex programmable logic devices (CPLDs), and field programmable gate arrays (FPGAs)).

The computer system 1201 may also include a display controller 1209 coupled to the bus 1202 to control a display 1210, such as a cathode ray tube (CRT), for displaying information to a computer user. The computer system includes input devices, such as a keyboard 1211 and a pointing device 1212, for interacting with a computer user and providing information to the processor 1203. The pointing device 1212, for example, may be a mouse, a trackball, or a pointing stick for communicating direction information and command selections to the processor 1203 and for controlling cursor movement on the display 1210. In addition, a printer may provide printed listings of data stored and/or generated by the computer system 1201.

The computer system 1201 performs a portion or all of the processing steps of the invention in response to the processor 1203 executing one or more sequences of one or more instructions contained in a memory, such as the main memory 1204. Such instructions may be read into the main memory 1204 from another computer readable medium, such as a hard disk 1207 or a removable media drive 1208. One or more processors in a multi-processing arrangement may also be employed to execute the sequences of instructions contained in main memory 1204. In alternative embodiments, hard-wired circuitry may be used in place of or in combination with software instructions. Thus, embodiments are not limited to any specific combination of hardware circuitry and software.

As stated above, the computer system 1201 includes at least one computer readable medium or memory for holding instructions programmed according to the teachings of the invention and for containing data structures, tables, records, or other data described herein. Examples of computer readable media are compact discs, hard disks, floppy disks, tape, magneto-optical disks, PROMs (EPROM, EEPROM, flash EPROM), DRAM, SRAM, SDRAM, or any other magnetic medium, compact discs (e.g., CD-ROM), or any other optical medium, punch cards, paper tape, or other physical medium with patterns of holes, a carrier wave (described below), or any other medium from which a computer can read.

Stored on any one or on a combination of computer readable media, the present invention includes software for controlling the computer system 1201, for driving a device or devices for implementing the invention, and for enabling the computer system 1201 to interact with a human user (e.g., print production personnel). Such software may include, but is not limited to, device drivers, operating systems, development tools, and applications software. Such computer readable media further includes the computer program product of the present invention for performing all or a portion (if processing is distributed) of the processing performed in implementing the invention.

The computer code devices of the present invention may be any interpretable or executable code mechanism, including but not limited to scripts, interpretable programs, dynamic link libraries (DLLs), Java classes, and complete executable programs. Moreover, parts of the processing of the present invention may be distributed for better performance, reliability, and/or cost.

The term "computer readable medium" as used herein refers to any medium that participates in providing instructions to the processor 1203 for execution. A computer readable medium may take many forms, including but not limited to, non-volatile media, volatile media, and transmission media. Non-volatile media includes, for example, optical, magnetic disks, and magneto-optical disks, such as the hard disk 1207 or the removable media drive 1208. Volatile media includes dynamic memory, such as the main memory 1204. Transmission media includes coaxial cables, copper wire and fiber optics, including the wires that make up the bus 1202. Transmission media also may also take the form of acoustic or light waves, such as those generated during radio wave and infrared data communications.

Various forms of computer readable media may be involved in carrying out one or more sequences of one or more instructions to processor 1203 for execution. For example, the instructions may initially be carried on a magnetic disk of a remote computer. The remote computer can load the instructions for implementing all or a portion of the present invention remotely into a dynamic memory and send the instructions over a telephone line using a modem. A modem local to the computer system 1201 may receive the data on the telephone line and use an infrared transmitter to convert the data to an infrared signal. An infrared detector coupled to the bus 1202 can receive the data carried in the infrared signal and place the data on the bus 1202. The bus 1202 carries the data to the main memory 1204, from which the processor 1203 retrieves and executes the instructions. The instructions received by the main memory 1204 may optionally be stored on storage device 1207 or 1208 either before or after execution by processor 1203.

The computer system 1201 also includes a communication interface 1213 coupled to the bus 1202. The communication interface 1213 provides a two-way data communication coupling to a network link 1214 that is connected to, for example, a local area network (LAN) 1215, or to another communications network 1216 such as the Internet. For example, the communication interface 1213 may be a network interface card to attach to any packet switched LAN. As another example, the communication interface 1213 may be an asymmetrical digital subscriber line (ADSL) card, an integrated services digital network (ISDN) card or a modem to provide a data communication connection to a corresponding type of communications line. Wireless links may also be implemented. In any such implementation, the communication interface 1213 sends and receives electrical, electromagnetic or optical signals that carry digital data streams representing various types of information.

The network link 1214 typically provides data communication through one or more networks to other data devices. For example, the network link 1214 may provide a connection to another computer through a local network 1215 (e.g., a LAN) or through equipment operated by a service provider, which provides communication services through a communications network 1216. The local network 1214 and the communications network 1216 use, for example, electrical, electromagnetic, or optical signals that carry digital data streams, and the associated physical layer (e.g., CAT 5 cable, coaxial cable, optical fiber, etc). The signals through the various networks and the signals on the network link 1214 and through the communication interface 1213, which carry the digital data to and from the computer system 1201 may be implemented in baseband signals, or carrier wave based signals. The baseband signals convey the digital data as unmodulated electrical pulses that are descriptive of a stream of digital data bits, where the term "bits" is to be construed broadly to mean symbol, where each symbol conveys at least one or more information bits. The digital data may also be used to modulate a carrier wave, such as with amplitude, phase and/or frequency shift keyed signals that are propagated over a conductive media, or transmitted as electromagnetic waves through a propagation medium. Thus, the digital data may be sent as unmodulated baseband data through a "wired" communication channel and/or sent within a predetermined frequency band, different than baseband, by modulating a carrier wave. The computer system 1201 can transmit and receive data, including program code, through the network(s) 1215 and 1216, the network link 1214, and the communication interface 1213. Moreover, the network link 1214 may provide a connection through a LAN 1215 to a mobile device 1217 such as a personal digital assistant (PDA) laptop computer, or cellular telephone.

The present invention includes a user-friendly interface that allows individuals of varying skill levels to search numerous digital media archives and archive types as well as allows users to design produce and print statistical reports about information stored within these archives. The interface allows users to optionally enable virus checking and duplicate checking as well as to determine and display the file types number of files and estimate number printed pages of printable files. The interface also allows individuals to easily identify and tag duplicates, infected files, and encoded and encrypted files. The interface also allows individuals to create a time stamp for digital authentication for each file processed. The present invention allows for such files to be sent to another device for further processing.

The present invention also includes software and computer programs designed to enable electronic legal discovery as described previously.

Obviously, numerous modifications and variations of the present invention are possible in light of the above teachings. It is therefore to be understood that within the scope of the appended claims, the invention may be practiced otherwise than as specifically described herein.

## Claims

1. An electronically-stored document data profiling apparatus, comprising:
a data access module configured to download data to be profiled from an archive via at least one of a network connection, direct connection, a wireless connection, and a portable media drive, said data to be profiled including a plurality of files;
a search and filter module configured to search said data and exclude files other than said plurality of files according to predetermined filter criteria;
a virus checking module configured to check said plurality of files for absence of viruses;
a duplication checking module configured to identify duplicate files of said plurality of files;
a page estimating module configured to estimate at least one of a number of printed pages and a printing cost for said plurality of files after being processed by said search and filter module and said duplication checking module; and
a time stamping module configured to associate a time stamp to said plurality of files.

2. The apparatus of Claim 1, further comprising:
an encryption/encoding detection module configured to identify files in said plurality of files that are at least one of encrypted and encoded.

3. The apparatus of Claim 2, further comprising:
a decryption/decoding module configured to at least one of decrypt and decode said files in said plurality of tiles that are at least one of encrypted and encoded.

4. The apparatus of Claim 1, further comprising:
a virus cleaning module configured to remove a virus from a file of said plurality of files that is determined by said virus checking module to contain a virus.

5. The apparatus of Claim 1, further comprising:
a search and filter criteria storage module that contains said predetermined filter criteria.

6. The apparatus of Claim 1, further comprising:
a de-duplication module configured to remove duplicate files identified in said duplication checking module.

7. The apparatus of Claim 1, further comprising:
a data export module configured to export at least a portion of a file to a remote processor via one of a network connection, direct connection, a wireless connection, and a portable media drive, wherein
said remote processor is configured to at least one of store profile results, remove a virus, and decrypt/decode a file.

8. The apparatus of Claim 1, further comprising:
an external control module configured to receive instructions and to provide status information to a remote control device.

9. The apparatus of Claim 1, further comprising:
a profile results storage module configured to store results of a profile operation; and
a printer connection module configured to relay information to a printer.

10. A system configured to profile electronically-stored document data, comprising:
an electronically-stored document data profiling apparatus; and
a printer, wherein
said electronically-stored document data profiling apparatus includes
a data access module configured to download data to be profiled from an archive via at least one of a network connection, direct connection, a wireless connection, and a portable media drive, said data to be profiled including a plurality of files,
a search and filter module configured to search said data and exclude files other than said plurality of files according to predetermined filter criteria,
a virus checking module configured to check said plurality of files for absence of viruses,
a duplication checking module configured to identify duplicate files of said plurality of files,
a page estimating module configured to estimate a number of printed pages for said plurality of files after being processed by said search and filter module and said duplication checking module, and
a time stamping module configured to estimate a number of printed pages for said plurality of files after being processed by said search and filter module and said duplication checking module.

11. The system of Claim 10, said electronically-stored document data profiling apparatus further comprising:
an encryption/encoding detection module configured to identify files in said plurality of files that are at least one of encrypted and encoded.

12. The system of Claim 11, said electronically-stored document data profiling apparatus further comprising:
a decryption/decoding module configured to at least one of decrypt and decode said files in said plurality of tiles that are at least one of encrypted and encoded.

13. The system of Claim 11, said electronically-stored document data profiling apparatus further comprising:
a virus cleaning module configured to remove a virus from a file of said plurality of files that is determined by said virus checking module to contain a virus.

14. The system of Claim 11, said electronically-stored document data profiling apparatus further comprising:
a search and filter criteria storage module that contains said predetermined filter criteria.

15. The system of Claim 11, said electronically-stored document data profiling apparatus further comprising:
a de-duplication module configured to remove duplicate files identified in said duplication checking module.

16. The system of Claim 11, said electronically-stored document data profiling apparatus further comprising:
a data export module configured to export at least a portion of a file to a remote processor via one of a network connection, direct connection, a wireless connection, and a portable media drive, wherein
said remote processor is configured to at least one of store profile results, remove a virus, and decrypt/decode a file.

17. The system of Claim 11, said electronically-stored document data profiling apparatus further comprising:
an external control module configured to receive instructions and to provide status information to a remote control device.

18. The system of Claim 11, said electronically-stored document data profiling apparatus further comprising:
a profile results storage module configured to store results of a profile operation; and
a printer connection module configured to relay information to a printer.

19. A method for profiling electronically-stored document data, comprising:
downloading data to be profiled into an electronically-stored document data profiling apparatus, said data to be profiled including a plurality of files stored in an archive, including downloading via one of a network connection, direct connection, a wireless connection, and a portable media drive;
searching and filtering said data to be profiled against pre-determined search and filter criteria so as to produce a search result;
virus checking said search result so as to produce a virus checked file;
duplication checking one of said search result and said virus checked file so as to produce a de-duplicated file;
estimating a printed page count for said de-duplicated file; and
time stamping said de-duplicated file.

20. The method of Claim 19, further comprising:
encryption/encoding checking a file in said plurality of files so as to produce an encryption/encoding checked file.

21. The method of Claim 20, further comprising:
decrypting/decoding said encryption/encoding checked file so as to produce a decrypted/decoded file.

22. The method of Claim 19, further comprising:
virus cleaning said virus checked file so as to produce a virus cleaned file.

23. The method of Claim 21, further comprising:
exporting a file of said plurality of files to a remote processor via one of a network connection, direct connection, a wireless connection, and a portable media drive; and
at least one of storing profile results, removing a virus, and decrypting/decoding a file at said remote processor.

24. The method of Claim 21, further comprising:
at least one of storing results and printing results after at least one of
said searching and filtering step,
said virus checking step,
said duplication checking step,
said estimating a printed page count step, and
said time stamping step.

25. An apparatus for profiling electronically-stored document data, comprising:
means for downloading data to be profiled into an electronically-stored document data profiling apparatus, said data to be profiled including a plurality of files stored in an archive, including means for downloading via one of a network connection, direct connection, a wireless connection, and a portable media drive;
means for searching and filtering said data to be profiled in a remote database against pre-determined search and filter criteria so as to produce a selected file;
means for virus checking said selected file so as to produce a virus checked file;
means for duplication checking said virus checked file so as to produce a de-duplicated file;
means for estimating a printed page count said de-duplicated file so as to produce an estimated printed page count; and
means for time stamping said de-duplicated file.

26. A computer program product comprising a plurality of instructions configured to support a method of profiling electronically-stored document data, said method including
downloading data to be profiled into an electronically-stored document data profiling apparatus, said data to be profiled including a plurality of files stored in an archive, including downloading via one of a network connection, direct connection, a wireless connection, and a portable media drive,
searching and filtering said data to be profiled against pre-determined search and filter criteria so as to produce a search result,
virus checking said search result so as to produce a virus checked file,
duplication checking one of said search result and said virus checked file so as to produce a de-duplicated file,
estimating a printed page count for said de-duplicated file, and
time stamping said de-duplicated file.
